(19) Europäisches Patentamt

European Patent Office

Office européen des brevets

(11) **EP 1 666 564 A1**

(12) **EUROPEAN PATENT APPLICATION**
published in accordance with Art. 158(3) EPC

(43) Date of publication:
**07.06.2006 Bulletin 2006/23**

(51) Int Cl.:
***C09K 11/59*** (1985.01)

(21) Application number: **04772110.5**

(22) Date of filing: **18.08.2004**

(86) International application number:
**PCT/JP2004/012149**

(87) International publication number:
**WO 2005/019375 (03.03.2005 Gazette 2005/09)**

(84) Designated Contracting States:
**DE FR GB NL**

(30) Priority: **21.08.2003 JP 2003208182**

(71) Applicant: **Sumitomo Chemical Company, Limited Tokyo 104-8260 (JP)**

(72) Inventors:
• **HAMAMATSU, Hiroshi**
  **3050045 (JP)**

• **IMANARI, Yuichiro**
  **3050005 (JP)**
• **MIYAZAKI, Susumu**
  **Toride-shi, Ibaraki (JP)**

(74) Representative: **Vossius & Partner**
  **Siebertstrasse 4**
  **81675 München (DE)**

(54) **PHOSPHOR AND VACUUM ULTRAVIOLET EXCITED LIGHT EMITTING ELEMENT**

(57) The present invention provides a phosphor comprising at least one selected from the group consisting of Si and Ge, and Eu as an activator, and ratio R of not less than 40 %, wherein the ratio R is calculated by entering value of [a] being peak amplitude derived from $Eu^{2+}$ and value of [b] being peak amplitude derived from $Eu^{3+}$ in primary differential pattern of an X-ray absorption near edge structure spectrum into the following equation (1).

$$R(\%) = (a/(a+b)) \times 100 \qquad (1)$$

Fig. 1

**Description**

TECHNICAL FIELD

The present invention relates to a phosphor and a vacuum ultraviolet excited light-emitting device.

BACKGROUND ART

Phosphors are used in vacuum ultraviolet excited light-emitting devices such as plasma display panel (hereinafter being abbreviated as "PDP") and noble gas lamp; electron beam excited light-emitting devices such as CRT; ultraviolet excited light-emitting devices such as three-wavelength fluorescent lamp; and X-ray excited light-emitting devices such as X-ray imaging device and the like. For example, as a blue phosphor, known is an aluminate $BaMgAl_{10}O_{17}$: Eu having Eu as an activator , as a green phosphor, known is a silicate phosphor $Zn_2SiO_4$:Mn having Mn as an activator and as a red phosphor, known is a borate phosphor $(Y, Gd)BO_3$:Eu having Eu as an activator; these phosphors are used in vacuum ultraviolet excited light-emitting devices such as PDP and noble gas lamp.
The silicate phosphor represented by a formula of $(Ca, Sr)_{0.97}Eu_{0.03}Si_2O_6$ is proposed as a blue phosphor suitable for the vacuum ultraviolet excited light-emitting devices(JP-A No. 2002-332481).

DISCLOSURE OF THE INVENTION

The object of the present invention is to provide a phosphor having high brightness.
The present inventors diligently studied phosphors having high brightness and completed the present invention.
The present invention provides a phosphor comprising at least one selected from the group consisting of Si and Ge, and Eu as an activator, and ratio R of not less than 40 %, wherein the ratio R is calculated by entering value of [a] being peak amplitude derived from $Eu^{2+}$ and value of [b] being peak amplitude derived from $Eu^{3+}$ in primary differential pattern of an X-ray absorption near edge structure (hereinafter being abbreviated as "XANES") spectrum into the following equation (1).

$$R(\%) = (a/(a+b)) \times 100 \qquad (1)$$

The phosphor of the present invention has high brightness and is applied to a vacuum ultraviolet excited light-emitting device, ultraviolet excited light-emitting device, X-ray excited light-emitting device or electron beam excited light-emitting device and the like.
The phosphor of the present invention has higher brightness under irradiation with vacuum ultraviolet ray, it is especially suitable for a vacuum ultraviolet excited light-emitting device.
Therefore, the present invention also provides a vacuum ultraviolet excited light-emitting device including the phosphor mentioned above and use of the phosphor as a vacuum ultraviolet excited light-emitting device.

BRIEF DESCRIPTION OF THE DRAWINGS

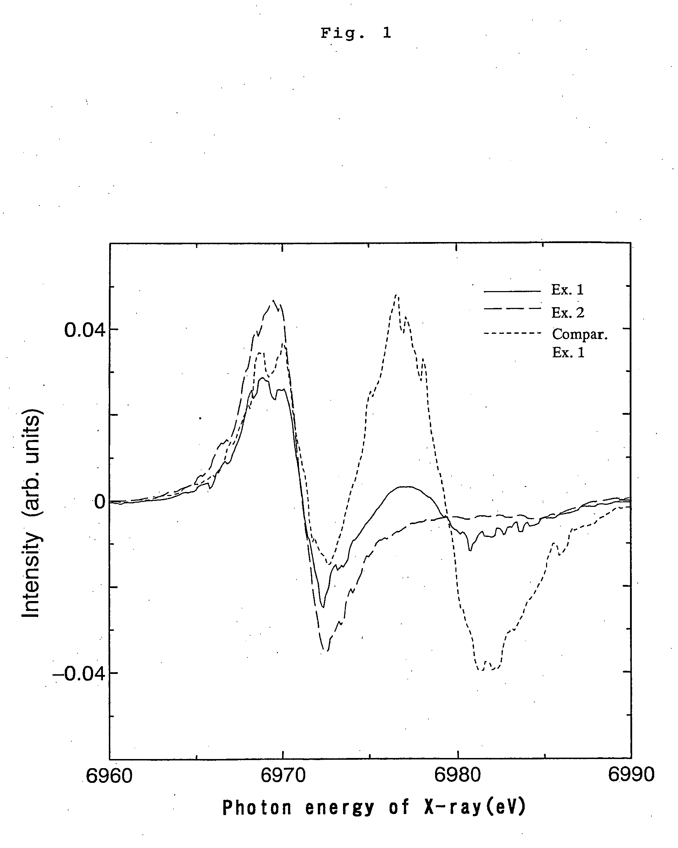

Fig. 1 shows primarily differential patterns of X-ray absorption near edge structure spectra of the phosphors obtained in Example 1, Example 2 and Comparative Example 1, respectively. The abscissa represents photon energy of X-ray (unit : eV) and the ordinate represents intensity (arbitrary unit).

MODE FOR CARRYING OUT THE INVENTION

Phosphor

The phosphor of the present invention includes at least one selected from the group consisting of silicon (Si) and germanium (Ge), and europium (Eu) as an activator.
The phosphor of the present invention includes preferably a silicate having at least one selected from the group consisting of calcium (Ca), strontium (Sr) and barium (Ba), at least one selected from the group consisting of magnesium (Mg) and zinc (Zn), and at least one selected from the group consisting of Si and Ge; or a germanate having at least one selected from the group consisting of Ca, Sr and Ba, at least one selected from the group consisting of Mg and Zn, and at least one selected from the group consisting of Si and Ge. Among these, the phosphor includes preferably a compound represented by a formula (2) and Eu as the activator;

$$mM^1O \cdot nM^2O \cdot 2M^3O_2 \qquad (2)$$

wherein, in the formula (2), $M^1$ is at least one selected from the group consisting of Ca, Sr and Ba,
$M^2$ is at least one selected from the group consisting of Mg and Zn,
$M^3$ is at least one selected from the group consisting of Si and Ge,
m is not less than 0.5 and not more than 3.5, and
n is not less than 0.5 and not more than 2.5.

Further, the phosphor of the present invention includes $Eu^{2+}$ and optionally $Eu^{3+}$. The phosphor includes a ratio R of not less than 40 %, preferably not less than 60 %, more preferably not less than 80 %,wherein the ratio R is calculated by entering value of [a] being peak amplitude derived from $Eu^{2+}$ and value of [b] being peak amplitude derived from $Eu^{3+}$ in primary differential pattern of an XANES spectrum into the above-described equation (1). The ratio R may be obtained according to the steps of (a) to (d).

(a) A phosphor is analyzed to obtain an XANES spectrum thereof and an L3 absorption edge spectrum of Eu. Usually, a peak derived from $Eu^{2+}$ is shown at about 6970 eV and a peak derived from $Eu^{3+}$ is shown at about 6980 eV in the L3 absorption edge spectrum. Therefore, measurement of the spectrum is carried out within a range including both peaks (for example, from 6940 eV to 7040 eV).
(b) The obtained spectrum is primarily differentiated.
Primary differentiation may reduce the influence caused by background.
(c) A value of maximum (summit) of the peak derived from $Eu^{2+}$ in the pattern (obtained by primary differentiation) and value of minimum (bottom) of the trough at the higher energy side therefrom are measured. A value of [a] being peak amplitude is calculated as the difference between those values. Similarly, a value of maximum (summit) of the peak derived from $Eu^{3+}$ in the pattern and value of minimum (bottom) of the trough at the higher energy side therefrom are measured. A value of [b] being peak amplitude is calculated as the difference between those values.
(d) A ratio R is calculated by entering the value of [a] being peak amplitude and the value of [b] being peak amplitude into the foregoing equation (1).

Method for producing a phosphor

The phosphor of the present invention may, for example, be produced by a method including the steps of (1) and (2) :

(1) calcining a mixture of metal compounds to obtain a phosphor substance having at least one selected from the group consisting of Si and Ge; and Eu, and,
(2) acid washing the obtained phosphor substance.

The metal compounds in the step (1) may be an oxide of metal elements contained in the phosphor of the present invention, or
compounds such as hydroxides, carbonates, nitrates, halides and oxalates of the metal elements, which convert to the oxide of metal elements by calcination. Examples of the metal compounds are as follows:

silicon compounds such as silicon dioxide,
germanium compounds such as germanium oxide,
europium compounds such as europium oxide,
calcium compounds such as calcium oxide and calcium carbonate,
strontium compounds such as strontium oxide and strontium carbonate,
barium compounds such as barium oxide and barium carbonate,
manganese compounds such as manganese oxide,
magnesium compounds such as magnesium carbonate and basic magnesium carbonate,
zinc compounds such as zinc oxide and
compounds containing these listed metals.

The metal compounds are preferably hydroxides, carbonates, nitrates, halides, oxalates or oxides, which have a high purity (about 99 % by weight or more).

The metal compounds are weighed to obtain a predetermined composition. For example, when producing a phosphor represented by a formula of $Ca_{0.92}Sr_{0.05}Eu_{0.03}MgSi_2O_6$, $CaCO_3$, $SrCO_3$, $EU_2O_3$, $MgO$ and $SiO_2$ may be mixed in molar ratio of 0.92 : 0.05 : 0.015 : 1 : 2. When producing a phosphor represented by a formula of $Ca_{0.78}Sr_{0.2}Eu_{0.02}MgSi_2O_6$, $CaCO_3$, $SrCO_3$, $Eu_2O_3$, $MgO$ and $SiO_2$ may be mixed in molar ratio of 0.78 : 0.2 : 0.01 : 1 : 2 . Mixing of the weighed metal compounds may be carried out, for example, by using a ball mill, a vessel equipped with V-shape mixer or agitator.

Calcination in the step (1) is preferably carried out under a reductive atmosphere, for example, under a nitrogen ($N_2$) atmosphere containing hydrogen from about 0.1 % by volume to about 10 % by volume or under an argon (Ar) atmosphere containing hydrogen from about 0.1 % by volume to about 10 % by volume. To gain highly reductive effect, a mixture including at least two kinds of metal compounds added with an appropriate amount of carbon may be calcined; or at least two kinds of metal compounds may be mixed with an appropriate amount of carbon, followed by calcining the mixture. Calcination may usually be carried out at from about 900 °C to about 1500 °C for from about 1 hour to about 100 hours.

When a compound which can be converted to an oxide by decomposition at high temperature such as hydroxide, carbonate, nitrate, halide and oxalate is contained in the mixture above, carbonates, nitrates, halides and oxalates, the mixture may be pre-calcined before calcination. Calcination may be carried out under any of oxidative atmosphere (for example, in air) and reductive atmosphere. Calcination may be carried out at a temperature to remove crystal water in hydroxides, carbonates, nitrates, halides and oxalates or at a temperature to convert hydroxides, carbonates, nitrates, halides and oxalates to an oxide, usually carried out from not less than about 400 °C and less than about 900 °C.

The phosphor substance obtained in the step (1) may be pulverized or classified. Pulverization may be carried out by using a ball mill, vibrating mill , roll mill or jet mill. Classification may be carried out by using a wet classifier such as a settler, hydrocyclone and centrifuge; a dry classifier such as a cyclone, air separator and Turboclassifier (trade name, manufactured by Nisshin Flour Milling Inc.) . A specific surface area of the phosphor may be changed by pulverization or classification.

Acid-washing in the step (2) may be carried out with an organic acid such as acetic acid and oxalic acid; an inorganic acid such as hydrochloric acid, nitric acid and sulfuric acid. The acid is preferably hydrochloric acid, nitric acid and sulfuric acid, more preferably hydrochloric acid. A hydrogen ion concentration of the acid is usually about 0.01 mole/l or more, preferably about 0.1 mole/l or more, and usually about 5 mole/l or less, preferably about 2 mole/l or less.

Acid washing may be carried out, for example, by dipping the phosphor obtained in the step (1) into an acid. Specifically, the phosphor may be put in a vessel filled with an acid, further may be maintained in the vessel while agitating contents in the vessel. The phosphor may be put in a ball mill together with an acid, and the ball mill is rotated. The acid washing may be usually carried out under conditions at temperature : a room temperature (about 25 °C ) to about 80 °C , and time : about 10 minutes to about 10 hours.

The phosphor obtained by acid washing is usually solid-liquid separated and then is dried. The solid-liquid separation may be carried out by filtration, suction filtration, pressure filtration, centrifugal separation, decantation or the like. Drying may be carried out by using a vacuum dryer, heated-gas dryer, conical dryer, rotary evaporator or the like. The phosphor may be further pulverized or classified.

Vacuum ultraviolet excited light-emitting device

The vacuum ultraviolet excited light-emitting device of the present invention includes the phosphor described above, and usually includes the phosphor and an electrode. Examples of the vacuum ultraviolet excited light-emitting device include a PDP, noble gas lamp and the like.

The PDP includes a rear substrate, a phosphor layer, a transparent electrode, a bus electrode, a dielectric layer and a front substrate. For example, the PDP may be produced according to the method disclosed in JP 10-195428.

The method for producing the PDP may include the steps of (I) to (IV):

(I) mixing a phosphor with a binder (such as cellulose compounds, polyvinyl alcohols) and an organic solvent to obtain a phosphor paste, for blue phosphor, green phosphor and red phosphor;

(II) coating the phosphor paste obtained in the step (I) on an inner surface of the rear substrate (by screen printing or the like), of which inner surface is divided in a stripe shape by a barrier rib and has an address electrode, and on a wall of the barrier rib, followed by firing of the coated paste at from about 300 °C to about 600 °C to form a phosphor layer, for blue phosphor paste, green phosphor paste and red phosphor paste;

(III) lapping a front glass substrate, which has a dielectric layer and a protection layer on an inner side thereof and a transparent electrode and a bus electrode arranged in the direction being perpendicular to that of the phosphor layer, on the rear substrate,

(IV) charging a reduced-pressure noble gas (Xe, Ne and the like) into a space between the front glass substrate and rear substrate to form a discharging space.

A noble gas lamp may also be produced according to known methods except that the phosphor described above is used as a raw material.

Examples

The present invention is described in more detail by following Examples, which should not be construed as a limitation upon the scope of the present invention. The properties of phosphors were measured by the following methods.

Ratio R:

An XANES spectrum was measured by using Beamline BL-9A of Photon Factory, Institute of Materials Structure Science, the HIGH ENERGY ACCELERATOR RESEARCH ORGANIZATION under following conditions:

· monochromator: Si(111)double crystal,
· angle calibration of monochromator: a position of pre-edge peak expressed at 8980.3 eV of K-absorption edge of Cu foil is set to be 12.7185 degree,
· Rejection of higher-order harmonics: plane Ni coated mirror,
· Scanning range: 6940 eV to 7040 eV (as X-ray energy),
· Measurement of incident X-ray intensity $I_0$ : use of an ionization chamber with active length of 17 cm, filled with $N_2$ gas,
· Measurement of transmitted X-ray intensity I : use of an ionization chamber with active length of 31 cm, filled with mixed gas of $N_2/Ar=85/15$,
· Integration time : 1 second/point, and
· Mode : Transmission.

Brightness:

A phosphor was placed in a vacuum chamber, and irradiated with vacuum ultraviolet by using an excimer lamps with wavelength of 146 nm (manufactured by USHIO INC., type: H0012) under pressure of 6.7 Pa ($5 \times 10^{-2}$ Torr) or less. The brightness of light emitted from the phosphor was measured.

BET specific surface area:

It is measured by using a specific surface area analyzer (trade name "FlowSorb II 2300 type", manufactured by Shimadzu corporation).

Particle size distribution:

It is measured by using a particle size distribution analyzer (trade name "Master Sizer 2000", manufactured by Malvern Instruments)

Example 1

Calcium carbonate ($CaCO_3$, manufactured by Ube Material Industries, Ltd., purity : 99.9 %], strontium carbonate [$SrCO_3$, manufactured by SAKAI CHEMICAL INDUSTRY CO., LTD., purity :99.9 %], europium oxide [$Eu_2O_3$, manufactured by Shin-Etsu Chemical Co., Ltd., purity :99.99 %], basic magnesium carbonate [$(MgCO_3)_4Mg(OH)_2 \cdot 5H_2O$ , manufactured by Kyowa Chemical Industry Co. , Ltd. , purity : 99 % or more) and silicon dioxide [$SiO_2$, manufactured by NIPPON AEROSIL CO., LTD., purity : 99.9 %) were weighed in a manner such that the molar ratio of $CaCO_3$ : $SrCO_3$ : $Eu_2O_3$ : $MgCO_3$ : $SiO_2$ was 0.92 : 0.05 : 0.015 : 1.0 : 2.0, and then these raw materials were mixed with isopropyl alcohol by using a wet ball mill for 4 hours to obtain a slurry. The isopropyl alcohol contained in the slurry thus obtained was removed by using a evaporator to obtain a dried mixed powder. The mixed powder was charged into an alumina crucible, followed by the alumina crucible being placed in a furnace. The mixed powder was calcined under nitrogen atmosphere containing hydrogen of 2 % by volume at 1200 °C for 2 hours , followed by cooling down to a room temperature to obtain a phosphor substance 1.
The obtained phosphor substance 1 was pulverized by a jet mill using air with a pressure of 1 kg/cm$^2$.
The pulverized phosphor substance 1 was added with hydrochloric acid with a hydrogen ion concentration of 1 mole/l to obtain a slurry. The slurry was agitated with a magnetic stirrer for 3 hours. The slurry was then solid-liquid separated by suction filtration, followed by reduced-pressure drying at 100 °C to obtain a phosphor 1.

The phosphor 1 was a compound represented by $Ca_{0.92}Sr_{0.05}Eu_{0.03}MgSi_2O_6$, and had a ratio R of 78 %, BET specific surface area of 3.97 m$^2$/g and average particle diameter of 1.69 $\mu$ m. The phosphor 1 emitted blue light under irradiation of vacuum ultraviolet. The phosphor had a brightness of 118 based on brightness of 100 of the phosphor substance 1 (which was not subjected to acid washing).

Example 2

Except that calcium carbonate (caCO$_3$, manufactured by Ube Material Industries, Ltd., purity :99.9 %), strontium carbonate (SrCO$_3$, manufactured by SAKAI CHEMICAL INDUSTRY CO., LTD. , purity :99.9 %), europium oxide (Eu$_2$O$_3$, manufactured by Shin-Etsu Chemical Co. , Ltd. , purity :99.99 %], basic magnesium carbonate C(MgCO$_3$)$_4$Mg (OH)$_2$·5H$_2$O, manufactured by Kyowa Chemical Industry Co., Ltd., purity :99 % or more) and silicon dioxide (SiO$_2$, manufactured by NIPPON AEROSIL CO. , LTD., purity : 99.9 %] were weighed in a manner such that the molar ratio of CaCO$_3$ : SrCO$_3$ : EU$_2$O$_3$ : MgCO$_3$ : SiO$_2$ was 0.78 : 0.2 : 0.01 : 1.0 : 2.0, the same operation in Example 1 was conducted to obtain a phosphor substance 2 and a phosphor 2.

The obtained phosphor 2 was a compound represented by $Ca_{0.78}Sr_{0.2}Eu_{0.02}MgSi_2O_6$, and had a ratio R of 99 %, BET specific surface area of 2.75 m$^2$/g and average particle size of 2.33 $\mu$m. The phosphor 2 emitted blue light under irradiation of vacuum ultraviolet. The phosphor 2 had a brightness of 122 based on brightness of 100 of the phosphor substance 2 (which was not subjected to acid washing).

Comparative Example 1

Except that hydrochloric acid was changed with water having a hydrogen ion concentration of 10$^{-7}$ mole/l (pH=7), the same operation in Example 1 was conducted to obtain a phosphor 3. The obtained phosphor 3 had a ratio R of 37 % and a brightness of 100.

**Claims**

1.  A phosphor comprising at least one selected from the group consisting of Si and Ge, and Eu as an activator, and ratio R of not less than 40 %, wherein the ratio R is calculated by entering value of [a] being peak amplitude derived from Eu$^{2+}$ and value of [b] being peak amplitude derived from Eu$^{3+}$ in primary differential pattern of an X-ray absorption near edge structure spectrum into the following equation (1).

$$R(\%) = (a/(a+b)) \times 100 \qquad (1)$$

2.  The phosphor according to Claim 1 , wherein the ratio R is not less than 60 %.

3.  The phosphor according to Claim 2, wherein the ratio R is not less than 80 %.

4.  The phosphor according to Claim 1, wherein the phosphor further comprising at least one selected from the group consisting of Ca, Sr and Ba, and at least one selected from the group consisting of Mg and Zn.

5.  The phosphor according to Claim 1, wherein the phosphor has a compound represented by a formula (2) and Eu as the activator;

$$mM^1O \cdot nM^2O \cdot 2M^3O_2 \qquad (2)$$

wherein, in the formula (2), M$^1$ is at least one selected from the group consisting of Ca, Sr and Ba,
M$^2$ is at least one selected from the group consisting of Mg and Zn,
M$^3$ is at least one selected from the group consisting of Si and Ge,
m is not less than 0.5 and not more than 3.5 and
n is not less than 0.5 and not more than 2.5.

**6.** A vacuum ultraviolet excited light-emitting device comprising any of the phosphors according to Claim 1 to 5.

**7.** Use of any of the phosphors according to Claim 1 to 5 as a vacuum ultraviolet excited light-emitting device.

Fig. 1

<table>
<tr><td colspan="3" align="center"><strong>INTERNATIONAL SEARCH REPORT</strong></td><td>International application No.<br>PCT/JP2004/012149</td></tr>
</table>

**A. CLASSIFICATION OF SUBJECT MATTER**
Int.Cl⁷ C09K11/59

According to International Patent Classification (IPC) or to both national classification and IPC

**B. FIELDS SEARCHED**

Minimum documentation searched (classification system followed by classification symbols)
Int.Cl⁷ C09K11/59

Documentation searched other than minimum documentation to the extent that such documents are included in the fields searched

| | | | |
|---|---|---|---|
| Jitsuyo Shinan Koho | 1940-1992 | Toroku Jitsuyo Shinan Koho | 1994-1996 |
| Kokai Jitsuyo Shinan Koho | 1971-1992 | Jitsuyo Shinan Toroku Koho | 1996-2004 |

Electronic data base consulted during the international search (name of data base and, where practicable, search terms used)
JICST(JOIS)

**C. DOCUMENTS CONSIDERED TO BE RELEVANT**

| Category* | Citation of document, with indication, where appropriate, of the relevant passages | Relevant to claim No. |
|---|---|---|
| X | EP 1193306 A2 (Sumitomo Chemical Co., Ltd.), 03 April, 2002 (03.04.02), & JP 2002-332481 A & US 2002-38861 A1 & CN 1345908 A | 1-7 |
| X | JP 2003-132803 A (Hitachi, Ltd.), 09 May, 2003 (09.05.03), & CN 1417831 A & US 2003-85853 A1 | 1-7 |
| X | JP 2003-142004 A (Hitachi, Ltd.), 16 May, 2003 (16.05.03), & CN 1417831 A & US 2003-85853 A1 | 1-7 |
| X | JP 2003-213254 A (Tosoh Corp.), 30 July, 2003 (30.07.03), (Family: none) | 1-7 |

☒ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 November, 2004 (11.11.04) | 07 December, 2004 (07.12.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
|---|
| PCT/JP2004/012149 |

C (Continuation). DOCUMENTS CONSIDERED TO BE RELEVANT

| Category* | Citation of document, with indication, where appropriate, of the relevant passages | Relevant to claim No. |
|---|---|---|
| X | JP 2003-27054 A (Kasei Optonix, Ltd.), 29 January, 2003 (29.01.03), (Family: none) | 1-7 |
| X | EP 1199757 A2 (Philips Corporate Intellectual Property Gmbh), 24 April, 2002 (24.04.02), & DE 10051242 A1 & CN 1349262 A & US 2002-105266 A1 & JP 2002-223008 A | 1-7 |
| P,X | US 2004-27047 A1 (Kasei Optonix, Ltd.), 12 February, 2004 (12.02.04), & JP 2004-131677 A2 | 1-7 |
| P,X | JP 2003-261870 A (Tosoh Corp.), 19 September, 2003 (19.09.03), (Family: none) | 1-7 |
| P,X | JP 2004-18679 A (Konica Minolta Holdings Inc.), 22 January, 2004 (22.01.04), (Family: none) | 1-7 |
| P,X | JP 2003-261868 A (National Institute of Advanced Industrial Science and Technology), 19 September, 2003 (19.09.03), (Family: none) | 1-7 |

Form PCT/ISA/210 (continuation of second sheet) (January 2004)

| INTERNATIONAL SEARCH REPORT | International application No. |
|---|---|
| | PCT/JP2004/012149 |

Claims 1-7 in this application describe a phosphor defined by a desired property that a value calculated from a peak amplitude derived from $Eu^{2+}$ and a peak amplitude derived from $Eu^{3+}$ is at least 40% for a pattern obtained by the first-order-differentiation of an X-ray absorption end vicinity structure spectrum.

However, since this calculation expression is not generally used for specifying a phosphor and therefore the scope of a phosphor represented by such a calculation expression cannot be specified even allowing for a technical common sense at the time of the application, these claims fail to fulfill the requirement of clearness and conciseness stipulated in PCT Article 6.

In addition, various types of phosphors included in this calculation expression are assumed, however, only two types of phosphors are disclosed in the descriptions of this application; therefore only a limited number of phosphors are disclosed in the description within the meaning of PCT Article 5 and are not supported within the meaning of PCT Article 6.

Accordingly, this search has been carried out mainly on a specific phosphor specifically cited in the descriptions.

Form PCT/ISA/210 (extra sheet) (January 2004)